# EUROPEAN PATENT APPLICATION

(11) **EP 3 285 466 A1**
(43) Date of publication of application: **21.02.2018**
(21) Application number: 16780287.5
(22) Date of filing: 14.04.2016
(51) Int. Cl.: H04M 1/04, H04B 1/38

(54) **TERMINAL SUPPORT STAND, TERMINAL CASE, AND TERMINAL ASSEMBLY**

(30) Priority: 15.04.2015 KR 20150052880; 15.04.2015 KR 20150052884
(71) Applicant: Shin, Woong Soo, Suwon-si, Gyeonggi-do 16350 (KR)
(72) Inventor: Shin, Woong Soo, Suwon-si, Gyeonggi-do 16350 (KR)
(74) Representative: Taylor, Adam David
(86) International application number: PCT/KR2016/003879
(87) International publication number: WO 2016/167564

(57) **Abstract**

A terminal support stand, according to one embodiment, may comprise: a fixed plate capable of being attached to a terminal; a support plate selectively coupled with the fixed plate, wherein at least a part of the support plate makes contact with the ground when the support plate is spaced apart from the fixed plate; and a magnetic body that connects the fixed plate and the support plate and is attached to a compressible resilient body and the fixed plate or support plate, wherein the magnetic body selectively couples the fixed plate and the support plate. Further, a terminal support stand, according to another embodiment, may include: a fixed plate capable of being attached to a terminal; a first coupling part that is formed on one side of the fixed plate and includes an empty space and a first protrusion that has a saw tooth shape and is formed in the empty space; a support plate selectively coupled with the fixed plate, wherein at least a part of the support plate makes contact with the ground when the support plate is spaced apart from the fixed plate; a second coupling part that is formed on one side of the support plate and includes a second protrusion that has a saw tooth shape and is selectively engaged with the first protrusion; and a resilient body that connects the fixed plate and the support plate and is compressible.

## Description

### TECHNICAL FIELD

The following description of example embodiments relates to a terminal support stand, a terminal case, and a terminal assembly.

### RELATED ART

A mobile phone holder may place a mobile phone at a specific place or may hold the mobile phone at a predetermined angle from the ground. For example, a mobile phone holder for a vehicle may be attached to a dashboard or a front window so that a user may view a screen of a mobile phone while driving. Alternatively, a mobile phone holder for a desk may hold a mobile phone at a predetermined angle with the desk so that the user may easily view a screen of the mobile phone.

Korean Patent Laid-Open Publication No. 2004-0096686 discloses a mobile phone holder for fixing a mobile phone by including a pressing member, and Korean Patent Laid-Open Publication No. 2013-0021163 discloses a mobile phone holder that may hold a mobile phone using various sizes or shapes.

### DESCRIPTION

### OBJECTS

An aspect of at least one example embodiment provides a terminal support stand, a terminal case, and a terminal assembly that may minimize a volume if not used. An aspect of at least one example embodiment also provides a terminal support stand, a terminal case, and a terminal assembly that may hold a terminal by releasing a compressed state with a simple motion.

An aspect of at least one example embodiment also provides a terminal support stand that may be available regardless of a type or a size of a terminal.

### SOLUTIONS

The aforementioned aspects of at least one example embodiment may be achieved by providing a terminal support stand, a terminal case, and a terminal assembly as follows:
According to an aspect of at least one example embodiment, there is provided a terminal support stand including a fixed plate configured to be attachable to a terminal; a support plate configured to selectively couple with the fixed plate and to at least partially make contact with the ground when the support plate is spaced apart from the fixed plate; and an elastic body configured to connect the fixed plate and the support plate and to be compressible.

The terminal support stand may further include a magnetic body configured to attach on the fixed plate or the support plate and to selectively couple the fixed plate and the support plate.

The magnetic body may be provided at the center of the support plate or the fixed plate, and a coupling state between the fixed plate and the support plate may be released in response to pressing an edge of the support plate.

A plurality of magnetic bodies may be provided in a circumferential direction based on the center of the support plate or the fixed plate.

The magnetic body may include a first magnetic body configured to attach to the fixed plate, and a second magnetic body configured to attach to the support plate and to have a polarity opposite to that of the first magnetic body.

The first magnetic body may include a plurality of magnets having different polarities, and the second magnetic body may include a plurality of magnets having a polarity opposite to that of the second magnetic body.

Each of the first magnetic body and the second magnetic body may include a magnet having a plurality of polarities within a single entity.

The terminal support stand may further include a shielding member configured to attach to the fixed plate and to shield a magnetic force. The shielding member may be provided between the terminal and the magnetic body and configured to prevent the magnetic body from affecting the terminal.

The terminal support stand may further include an outer shielding member provided to the support plate.

The terminal support stand may further include a push guide formed along an edge of the fixed plate or the support plate so that a portion of the push guide is open. A coupling state between the fixed plate and the support plate may be released in response to pressing the open portion.

The fixed plate or the support plate may include a protrusion configured to protrude from one side of the fixed plate or support plate, a portion of the fixed plate or the support plate on which the protrusion is not formed may include a protrusion receiver configured to receive the protrusion and of which at least a portion is inclined, and the protrusion may be configured to release a coupling state between the fixed plate and the support plate by moving along a slope of the protrusion receiver in response to rotation of the fixed plate or the support plate in a state in which the protrusion receiver is received.

A projection around which a portion of the elastic body winds may be formed on the fixed plate or the support plate.

The projection may be configured to protrude from the fixed plate or the support plate, and may include a recess that is recessed inward from the fixed plate or the support plate.

A length of one side of the support plate may be formed to be greater than a length of another side of the support plate.

The support plate may be configured to be rotatable and an angle for holding the terminal may be adjustable by rotating the support plate.

The elastic body may include a tapered spring.

One cross-section of the elastic body may be formed to have an area greater than that of another cross-section of the elastic body.

According to an aspect of at least one example embodiment, there is provided a terminal case including a terminal cover configured to cover at least a portion of a terminal; a support plate configured to selectively couple with the terminal cover and to at least partially make contact with the ground when the support plate is spaced apart from the terminal cover; and an elastic body configured to connect the terminal cover and the support plate and to be compressible.

The terminal case may further include a magnetic body configured to attach on the terminal cover or the support plate and to selectively couple the terminal cover and the support plate.

The terminal cover may include a receiver recessed inward from the case and configured to receive the support plate.

The terminal case may further include a connecting body configured to hinge-connect the terminal cover and the support plate.

The terminal cover and the elastic body may be integrally formed through injection molding.

According to an aspect of at least one example embodiment, there is provided a terminal case including a terminal body; a support plate configured to selectively couple with the terminal body and to at least partially make contact with the ground when the support plate is spaced apart from the terminal body; and an elastic body configured to connect the terminal body and the support plate and to be compressible.

The terminal case may further include a magnetic body configured to attach on the terminal body or the support plate, and to selectively couple the terminal body and the support plate.

According to an aspect of at least one example embodiment, there is provided a terminal support stand including a fixed plate configured to be attachable to a terminal; a first coupler formed on one side of the fixed plate, and including a hollow and including a saw-toothed first protrusion formed inward from the hollow; a support plate configured to selectively couple with the fixed plate and to at least partially make contact with the ground when the support plate is spaced apart from the fixed plate; a second coupler formed on one side of the support plate and including a saw-toothed second protrusion configured to selectively engage with the first protrusion; and an elastic body configured to connect the fixed plate and the support plate and to be compressible.

The support plate may be configured to be rotatable, and the first coupler and the second coupler may be configured to selectively engage with each other in response to rotation of the support plate.

The second coupler may include a pillar configured to protrude from one side of the support plate, and the second protrusion may be formed along an outer side of the pillar.

The second protrusion may be formed on a portion of the pillar and an interval between the second protrusion and the support plate may be configured to be greater than a height of the first coupler, and the second coupler may be configured to penetrate the first coupler in response to coupling the fixed plate and the support plate, and at least a portion of the first protrusion and at least a portion of the second protrusion may be provided to overlap in response to rotation of the support plate in a state in which the second coupler has penetrated the first coupler, and interference may occur in a movement of the support plate in one direction.

According to an aspect of at least one example embodiment, there is provided a terminal support stand including a fixed plate configured to be attachable to a terminal; a first coupler formed on one side of the fixed plate and including a saw-toothed first protrusion; a support plate configured to selectively couple with the fixed plate and to at least partially make contact with the ground when the support plate is spaced apart from the fixed plate; a second coupler formed on one side of the support plate, and including a hollow and including a second protrusion formed inward from the hollow to selectively engage with the first protrusion; and an elastic body configured to connect the fixed plate and the support plate and to be compressible.

According to an aspect of at least one example embodiment, there is provided a terminal support stand including a fixed plate configured to be attachable to a terminal; a first coupler formed on one side of the fixed plate; a support plate configured to selectively couple with the fixed plate and to at least partially contact with the ground when the support plate is spaced apart from the fixed plate; a second coupler formed on one side of the support plate and configured to couple with the first coupler through a forced insertion scheme; and an elastic body configured to connect the fixed plate and the support plate and to be compressible.

According to an aspect of at least one example embodiment, there is provided a terminal case including a terminal cover configured to cover at least a portion of a terminal; a first coupler formed on one side of the case; a support plate configured to selectively couple with the case and to at least partially make contact with the ground when the support plate is spaced apart from the case; a second coupler formed on one side of the support plate and to couple with the first coupler through a forced insertion scheme; and an elastic body configured to connect the case and the support and to be compressible.

According to an aspect of at least one example embodiment, there is provided a terminal assembly including a terminal body; a first coupler formed on one side of the terminal, and including a hollow and including a saw-toothed first protrusion formed inward from the hollow; a support plate configured to selectively couple with the terminal and to at least partially make contact with the ground when the support plate is spaced apart from the terminal; a second coupler formed on one side of the support plate and including a saw-toothed second protrusion configured to selectively engage with the first protrusion; and an elastic body configured to connect the terminal and the support plate and to be compressible.

According to an aspect of at least one example embodiment, there is provided a terminal support stand including a fixed plate configured to be attachable to a terminal; a support plate configured to selectively couple with the fixed plate and to at least partially make contact with the ground when the support plate is spaced apart from the fixed plate; an elastic body configured to connect the fixed plate and the support plate and to be compressible; and an insertion groove formed on the fixed plate and into which at least a portion of the support plate inserts.

According to an aspect of at least one example embodiment, there is provided a terminal assembly including a terminal body; a first coupler formed on one side of the terminal body; a support plate configured to selectively couple with the terminal body and to at least partially make contact with the ground when the support plate is spaced apart from the terminal body; a second coupler formed on one side of the support plate and configured to couple with the first coupler through a forced insertion scheme; and an elastic body configured to connect the terminal body and the support plate and to be compressible.

According to an aspect of at least one example embodiment, there is provided a terminal case including a terminal cover configured to cover at least a portion of a terminal; a first coupler formed on one side of the terminal cover, and including a hollow and including a saw-toothed first protrusion formed inward from the hollow; a support plate configured to selectively couple with the terminal cover and to at least partially make contact with the ground when the support plate is spaced apart from the terminal cover; a second coupler formed on one side of the support plate and including a saw-toothed second protrusion configured to selectively engage with the first protrusion; and an elastic body configured to connect the terminal cover and the support plate and to be compressible.

### EFFECTS

A terminal support stand, a terminal case, and a terminal assembly according to example embodiments may be maintained with a volume being minimized if not used.

A terminal support stand, a terminal case, and a terminal assembly according to example embodiments may hold a terminal by releasing a compressed state with a simple motion.

A terminal support stand according to example embodiments may be used regardless of a type or a size of a terminal.

The effects of the disclosure are not limited thereto and other effects not described herein may be understood by one of ordinary skill in the art from the following description.

### BRIEF DESCRIPTION OF DRAWINGS

FIG. 1 illustrates a use state of a terminal support stand according to an example embodiment.
FIG. 2A is a perspective view of a terminal support stand in a state in which an elastic body is not compressed according to an example embodiment.
FIG. 2B is a perspective view of a terminal support stand in a state in which an elastic body is compressed according to an example embodiment.
FIG. 3A is a side-cross-sectional view of a terminal support stand in a state in which a fixed plate and a support plate are coupled according to an example embodiment.
FIG. 3B is a side-cross-sectional view of a terminal support stand in a state in which coupling between a fixed plate and a support plate is released according to an example embodiment.
FIG. 4 is a perspective view of a terminal support stand including a protrusion and a protrusion receiver according to an example embodiment.
FIG. 5 illustrates a state in which a protrusion is received in a protrusion receiver according to an example embodiment.
FIG. 6 is a perspective view of a terminal support stand including a push guide according to an example embodiment.
FIG. 7 is a perspective view of a support plate including a push guide according to an example embodiment.
FIG. 8 illustrates a state in which an elastic body is not compressed according to an example embodiment.
FIG. 9 illustrates a state in which an elastic body is compressed according to an example embodiment.
FIG. 10 illustrates a state in which an elastic body is compressed according to another example embodiment.
FIG. 11 illustrates examples of a shape of an elastic body according to another example embodiment.
FIG. 12 illustrates examples of a type of a support plate according to an example embodiment.
FIG. 13A illustrates an example in which a terminal is provided at a relatively small angle from the ground.
FIG. 13B illustrates an example in which a terminal is provided at a relatively great angle from the ground.
FIGS. 14 and 15 illustrate examples in which a plurality of magnetic bodies are provided according to an example embodiment.
FIGS. 16 and 17 illustrate examples in which a magnetic body has a plurality of polarities according to an example embodiment.
FIG. 18 is a perspective view of a terminal support stand including a shielding member according to an example embodiment.
FIG. 19 illustrates a support plate including a projection according to an example embodiment.
FIG. 20 is a side view of a support plate including a projection.
FIG. 21 is a perspective view of a terminal case according to an example embodiment.
FIG. 22 illustrates a state in which a terminal cover and a support plate are hinge-connected.
FIG. 23 illustrates a use state of FIG. 22.
FIG. 24 is a perspective view of a terminal assembly according to an example embodiment.
FIG. 25 illustrates a use state of a terminal support stand according to another example embodiment.
FIG. 26A is a perspective view illustrating a state in which an elastic body of a terminal support stand is not compressed according to another example embodiment.
FIG. 26B is a perspective view illustrating a state in which an elastic body of a terminal support stand is compressed and a support plate and a fixed plate are coupled according to another example embodiment.
FIG. 27 is a perspective view illustrating a fixed plate and a support plate according to another example embodiment.
FIG. 28A illustrates a state in which a fixed plate and a support plate are coupled.
FIG. 28B illustrates a state in which coupling between a fixed plate and a support plate is released.
FIG. 29 illustrates a terminal support stand including an insertion groove according to an example embodiment.
FIG. 30 illustrates an example in which a support plate is inserted into an insertion groove according to an example embodiment.
FIG. 31 is a perspective view illustrating a terminal case according to another example embodiment.
FIG. 32A illustrates an example of a shape of a support plate according to an example embodiment.
FIG. 32B illustrates another example of a shape of a support plate according to an example embodiment.

### DETAILED DESCRIPTION

Hereinafter, example embodiments are described in detail with reference to the accompanying drawings. Regarding the reference numerals assigned to the elements in the drawings, it should be noted that the same elements will be designated by the same reference numerals, wherever possible, even though they are shown in different drawings. Also, in the description of example embodiments, detailed description of well-known related structures or functions will be omitted when it is deemed that such description will cause ambiguous interpretation of the present disclosure.

In addition, terms such as first, second, A, B, (a), (b), and the like may be used herein to describe components. Each of these terminologies is not used to define an essence, order or sequence of a corresponding component but used merely to distinguish the corresponding component from other component(s). It should be noted that if it is described in the specification that one component is "connected", "coupled", or "joined" to another component, a third component may be "connected", "coupled", and "joined" between the first and second components, although the first component may be directly connected, coupled or joined to the second component.

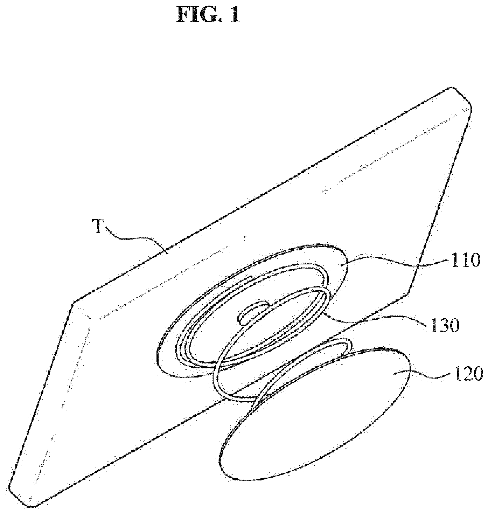

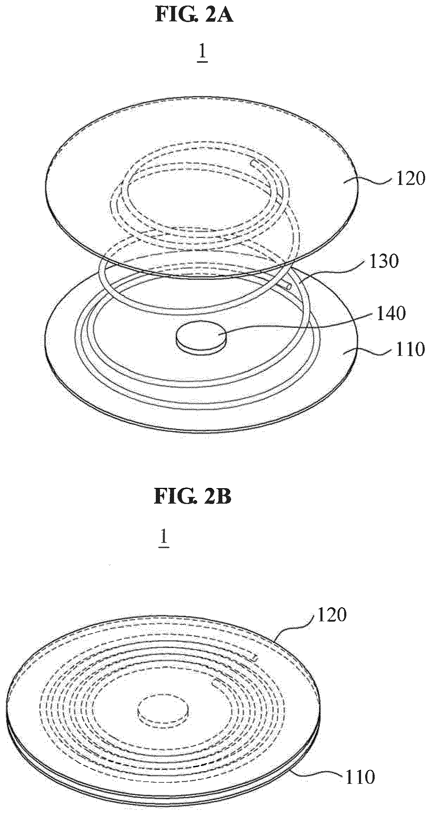

FIG. 1 illustrates a use state of a terminal support stand according to an example embodiment, FIG. 2A is a perspective view of a terminal support stand in a state in which an elastic body is not compressed according to an example embodiment, and FIG. 2B is a perspective view of the terminal support stand in a state in which the elastic body is compressed.

Referring to FIG. 1 and FIGS. 2A and 2B, a terminal support stand 1 according to an example embodiment may include a fixed plate 110, a support plate 120, and an elastic body 130. The terminal support stand 1 may be attached on a rear surface of a terminal T and may hold the terminal T so that a user may view a front surface of the terminal T. The terminal support stand 1 may hold the terminal T at a predetermined angle from the ground, so that the user may conveniently view a screen of the terminal T. The terminal T may include a mobile phone, a smartphone, a tablet, a linguistic learning machine, and an electronic book (e-book).

The fixed plate 110 may be attached to the terminal T, which may include attaching on a case that covers the terminal T. An adhesive sheet (not shown) may be provided on one side of the fixed plate 110. A repeatedly usable coupling agent may be employed for the adhesive sheet. Alternatively, the fixed plate 110 may include an absorption plate (not shown) that fixes the terminal T with an absorption force. A type of the fixed plate 110 is not limited thereto and the fixed plate 110 may include other configurations attachable to the terminal T.

Due to the above configuration, the terminal support stand may be used regardless of a terminal type or size.

The support plate 120 may selectively couple with the fixed plate 110. A state in which the support plate 120 and the fixed plate 110 are coupled may indicate a state in which the support plate 120 is in direct contact with the fixed plate 110 and may also indicate that another component is provided between the support plate 120 and the fixed plate 110 and the support plate 120 is connected to the fixed plate 110 through the other component.

In a state in which the support plate 120 is spaced apart from the fixed plate 110, at least a portion of the support plate 120 may make contact with the ground. The support plate 120 may serve as a support stand to support the terminal T relative to the ground.

The elastic body 130 may connect the fixed plate 110 and the support plate 120. One side of the elastic body 130 may be connected to the fixed plate 110 and another side of the elastic body 130 may be connected to the support plate 120. The elastic body 130 may be attached to the fixed plate 110 or the support plate 120 using adhesives, or may be inserted into a portion of the fixed plate 110 or the support plate 120. Alternatively, the elastic body 130 may be provided to the fixed plate 110 or the support plate 120 using an insert injection molding or an integral injection molding. The elastic body 130 may be provided to the fixed plate 110 or the support plate 120 using a double injection molding. However, it is provided as an example only and various methods may be used to connect the elastic body 130 to the fixed plate 110 or the support plate 120.

The elastic body 130 may include a compressible spring. Unless an external force is applied to the elastic body 130, the elastic body 130 may be maintained in a decompressed state. FIG. 2A illustrates a state in which an external force is not applied to the elastic body 130.

A cross-section of a strand that constitutes the elastic body 130 may be in a circular shape or a polygonal shape.

When the elastic body 130 is in a compressed state, the fixed plate 110 and the support plate 120 may be adjacent to each other. When the elastic body 130 is in a decompressed state, the fixed plate 110 may be spaced apart from the support plate 120. The elastic body 130 may be formed using a hard steel wire, a piano wire, or a spring stainless steel. Alternatively, the elastic body 130 may be formed using a plastic material. A plastic injection molding may be employed. It is provided as an example only. A material or an injection molding method of the elastic body 130 is not limited thereto.

The terminal support stand may include a magnetic body 140. The magnetic body 140 may be attached on the fixed plate 110 or the support plate 120. The magnetic body 140 enables selective coupling between the fixed plate 110 and the support plate 120. Hereinafter, a description is made based on a case in which the magnetic body 140 is provided to the fixed plate 110. The description may be applicable to a case in which the magnetic body 140 is provided to the support plate 120.

The support plate 120 may include a material attached to a magnet. Once the spring is compressed by pressing the fixed plate 110 or the support plate 120, the fixed plate 110 and the support plate 120 may couple with each other by way of the magnetic body 140. Herein, FIG. 2B illustrates a state in which the fixed plate 110 and the support plate 120 are coupled.

When the terminal support stand 1 is not used, a volume may be minimized by coupling the fixed plate 110 and the support plate 120.

In the case of using the terminal support stand 1, the terminal support stand 1 may hold the terminal T by releasing a contact state between the fixed plate 110 and the support plate 120 using the magnetic body 140. Once the contact between the fixed plate 110 and the support plate 120 is released, a compressed state of the elastic body 130 may be released and the fixed plate 110 and the support plate 120 may be spaced apart from each other by an elastic force of the elastic body 130. In a state in which the support plate 120 is spaced apart from the fixed plate 110, the terminal support stand 1 may hold the terminal T at a predetermined angle from the ground as shown in FIG. 1.

The elastic body 130 and the fixed plate 110 or the support plate 120 may be integrally formed through injection molding. For example, the fixed plate 110 and the elastic body 130 may be integrally formed through injection molding and a support body may be attached at an end of the elastic body 130. The fixed plate 110 and the elastic body 130 may be formed through plastic injection molding.

Alternatively, the fixed plate 110, the elastic body 130, and the support plate 120 may be integrally formed through injection molding. Alternatively, the elastic body 130 and the fixed plate 110 or the support plate 120 may be formed through insert injection molding or double injection molding.

The magnetic body 140 and the fixed plate 110 or the support plate 120 may be formed through insert injection molding or double injection molding.

The aforementioned injection molding methods of the elastic body 130, the fixed plate 110, the support plate 120, or the magnetic body 140 are provided as examples only.

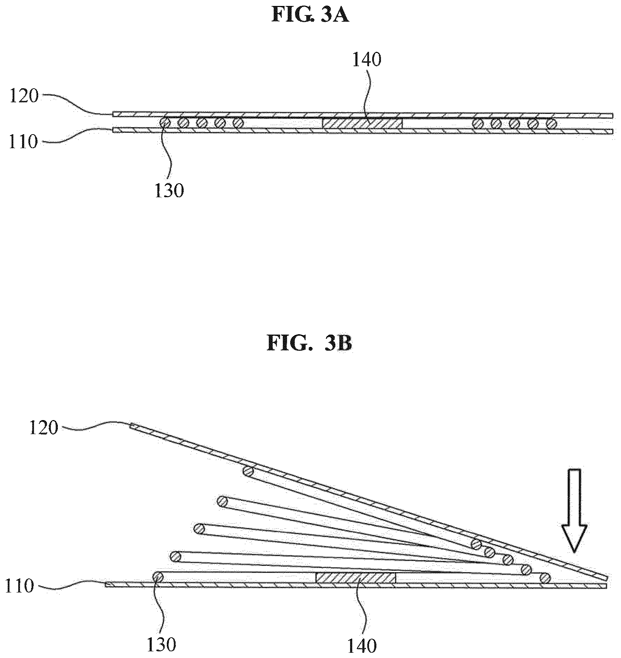

FIG. 3A is a side-cross-sectional view of a terminal support stand in a state in which a fixed plate and a support plate are coupled, and FIG. 3B is a side-cross-sectional view of the terminal support stand in which coupling between the fixed plate and the support plate is released.

Referring to FIGS. 3A and 3B, the magnetic body 140 may be provided at the center of the support plate 120 or the fixed plate 110. Hereinafter, for clarity of description, a description is made based on a case in which the magnetic body 140 is provided to the fixed plate 110. The description may be applicable to a case in which the magnetic body 140 is provided to the support plate 120.

In a state in which the support plate 120 is in contact with the fixed plate 110 by way of the magnetic body 140, the support plate 120 may be spaced apart from the fixed plate 110 at a predetermined distance except a central portion at which the support plate 120 is connected to the fixed plate 110 through the magnetic body 140. Here, a spaced height may be similar to a height of the magnetic body 140.

Referring to FIG. 3B, once one side of the support plate 120 is pressed, another side of the support plate 120 may rotate. In detail, once an edge of the support plate 120 slightly separate from the fixed plate 110 is pressed, an interval between the support plate 120 and the fixed plate 110 may be reduced at a pressed position or the support plate 120 may make direct contact with the fixed plate 110. At the same time, an interval between the other side of the support plate 120 and the fixed plate 110 may increase. Here, the edge may indicate a portion adjacent to an outer side of the support plate 120.

In response to rotation of the other side of the support plate 120, the support plate 120 may be separate from the magnetic body 140. Once the magnetic body 140 is separated, the support plate 120 may be spaced apart from the fixed plate 110 due to an elastic force of the elastic body 130.

A size of the magnetic body 140 or a length of the support plate 120 may be determined based on the aforementioned operations. For example, the magnetic body 140 may be configured with a size small enough to be separable from the center of the support plate 120 in response to rotation of the other side of the support plate 120. Alternatively, a user may release a coupling state between the support plate 120 and the fixed plate 110 by spreading a space between the support plate 120 and the fixed plate 110. For example, the user may separate support plate 120 from the fixed plate 110 by manually spreading the space between the support plate 120 and the fixed plate 110.

Due to the above configuration, if a side of the support plate 120 is pushed in a state in which the elastic body 130 is compressed, the elastic body 130 may be decompressed, the support plate 120 may be spaced apart from the fixed plate 110, and the terminal support stand 1 may hold the terminal T. Since the user may use the terminal support stand 1 with a simple motion, it is possible to provide a user convenience.

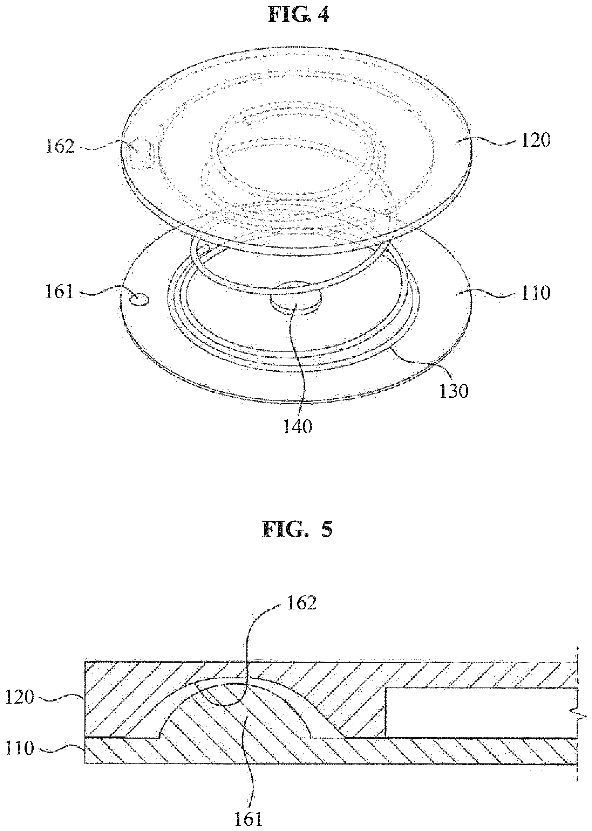

FIG. 4 is a perspective view of a terminal support stand including a protrusion and a protrusion receiver according to an example embodiment, and FIG. 5 illustrates a state in which a protrusion is received in a protrusion receiver according to an example embodiment.

Referring to FIGS. 4 and 5, the support plate 120 or the fixed plate 110 may include a protrusion 161 configured to protrude from one side of the support plate 120 or the fixed plate 110. That is, the protrusion 161 may be formed on the fixed plate 110 or the support plate 120. Hereinafter, for clarity of description, a description is made based on a case in which the protrusion 161 is formed on the fixed plate 110. The description may be applicable to a case in which the protrusion 161 is formed on the support plate 120. A portion of the support plate 120 or the fixed plate 110 on which the protrusion 161 is not formed may include a protrusion receiver 162 configured to receive the protrusion 161 and of which at least a portion is inclined. For example, when the protrusion 161 is formed on the fixed plate 110, the protrusion receiver 162 may be formed on the support plate 120.

The protrusion 161 and the protrusion receiver 162 may be formed at mutually corresponding positions, and the protrusion receiver 162 may have a space capable of receiving the protrusion 161. Accordingly, in a state in which the support plate 120 and the fixed plate 110 are coupled, the protrusion 161 may be received in the protrusion receiver 162.

At least a portion of the protrusion receiver 162 may be inclined. The protrusion receiver 162 may be configured so that a portion of the protrusion receiver 162 may receive the protrusion 161 and another portion of the protrusion receiver 162 may not sufficiently receive the protrusion 161 due to a slope.

Due to the above structure, once the support plate 120 or the fixed plate 110 rotates in a state in which the protrusion 161 is received in the protrusion receiver 162, the protrusion 161 may move along the slope of the protrusion receiver 162.

If the protrusion 161 is moved along the slope, an interval between the support plate 120 and the fixed plate 110 may increase and a state in which the fixed plate 110 and the support plate 120 are coupled through the magnetic body 140 may be released.

Once the coupling state using the magnetic body 140 is released, the support plate 120 may be spaced apart from the fixed plate 110 due to an elastic force of the elastic body 140 and the terminal support stand 1 may hold the terminal.

That is, since the coupling state between the support plate 110 and the support plate 120 may be released through a simple motion of rotating the fixed plate 110 or the support plate 120, the user may easily use the terminal support stand.

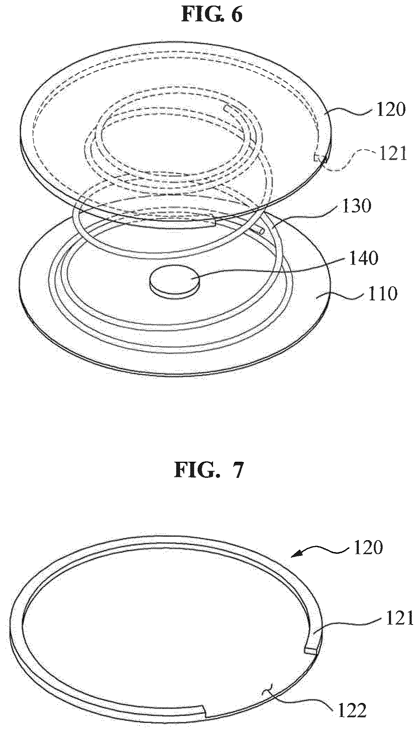

FIG. 6 is a perspective view of the terminal support stand 1 including a push guide 121 according to an example embodiment, and FIG. 7 is a perspective view of the support plate 120 including the push guide 121 according to an example embodiment.

Referring to FIGS. 6 and 7, the terminal support stand 1 may include the push guide 121 that is formed along the edge of the fixed plate 110 or the support plate 120. Hereinafter, for clarity of description, a description is made based on a case in which the push guide 121 is included in the support plate 120. The description may be applicable to a case in which the push guide 121 is included in the fixed plate 110.

The push guide 121 may be formed along the edge of the support plate 120. In this instance, a portion of the push guide 121 may be open. That is, the push guide 121 may not be formed on a portion of the edge of the support plate 120. Hereinafter, the portion on which the push guide 121 is not formed is referred to as an open portion 122.

The push guide 121 may be configured to not interrupt contact between the fixed plate 110 and the support plate 120 through the magnetic body 140, and to prevent a contact state between the fixed plate 110 and the support plate 120 from being released although the portion on which the push guide 121 is formed is pressed.

That is, the push guide 121 may reduce an interval between the fixed plate 110 and the support plate 120. Accordingly, although one side on which the push guide 121 is formed is pressed, another side not pressed may not rotate or may rotate insufficient to release a magnetic contact by the magnetic body 140.

Accordingly, when the open portion 122 is pressed, the contact state between the fixed plate 110 and the support plate 120 by the magnet may be released. A position of the open portion 122 may be marked on the support plate 120 to guide a portion to be pressed for the user to use the terminal support stand 1.

Due to the above configuration, a portion to be pressed by the user to separate the fixed plate 110 from the support plate 120 is limited. Accordingly, it is possible to prevent an unnecessary decompression of the spring if not used.

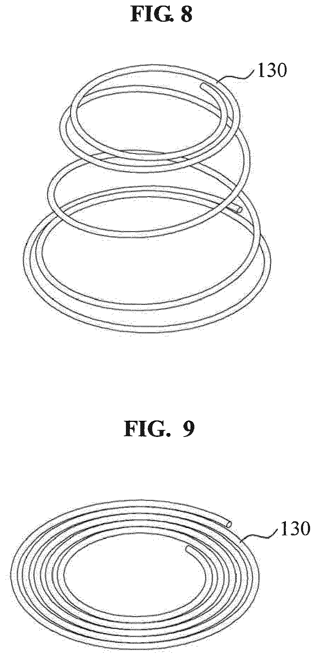

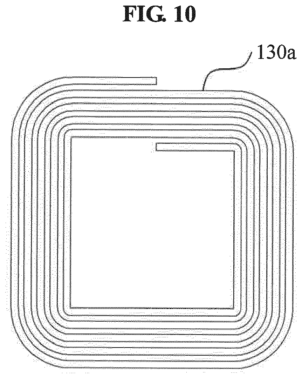

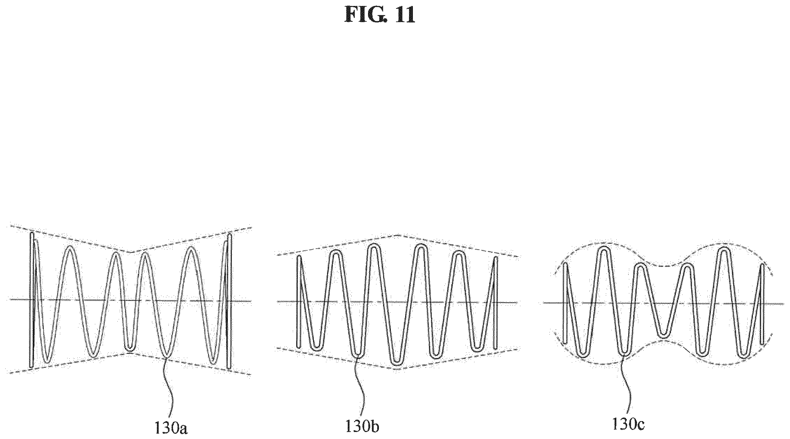

FIG. 8 illustrates a state in which an elastic body is not compressed according to an example embodiment, FIG. 9 illustrates a state in which an elastic body is compressed according to an example embodiment, FIG. 10 illustrates a state in which an elastic body is compressed according to another example embodiment, and FIG. 11 illustrates examples of a shape of an elastic body according to another example embodiment.

FIGS. 8 and 10, the elastic body 130 may include a tapered spring. The tapered spring may have a gradually increasing diameter in one direction.

For example, the tapered spring may have a small diameter on a contact portion with the support plate 120 and may have a gradually increasing diameter with getting close to a contact portion with the fixed plate 110. The above type may help the terminal support stand 1 firmly supports the terminal T.

When the tapered spring is compressed, the respective portions of the spring may not interfere with one another and be compressed to a shape close to a plane. Accordingly, when compressing the terminal support stand 1, the volume may be minimized.

The elastic body 130 may be configured in an overall circular shape. Alternatively, the elastic body 130 may be configured in an overall polygonal shape. FIGS. 8 and 9 illustrate an example in which the elastic body 130 is provided in an overall circular shape, and FIG. 10 illustrates an example in which the elastic body 130 is provided in an overall quadrangular shape.

Referring to FIG. 11, one cross-section of an elastic body may be formed to have an area greater than that of another cross-section of the elastic body.

An elastic body 130a may be configured to have a largest cross-section at both ends and to have a smallest cross-section at the center. Alternatively, an elastic body 130b may be configured to have a smallest cross-section at both ends and to have a largest cross-section at the center. Alternatively, an elastic body 130c may be configured to have a repeatedly increasing and decreasing cross-section.

That is, in addition to the aforementioned tapered spring, the elastic body may be configured using various shapes.

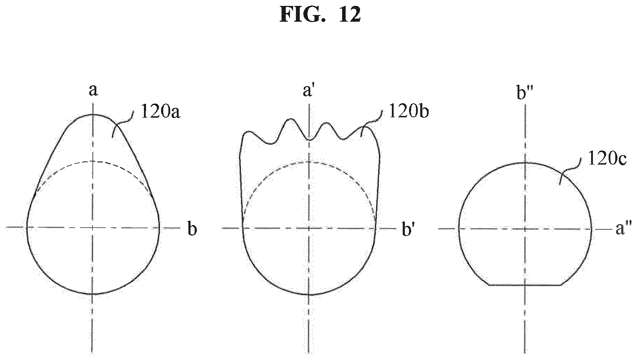

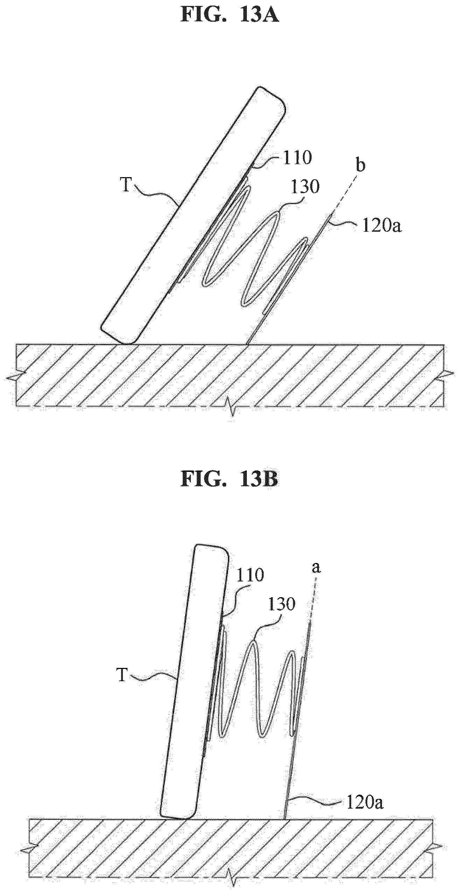

FIG. 12 illustrates examples of a shape of a support plate according to an example embodiment, FIG. 13A illustrates an example in which a terminal is provided at a relatively small angle from the ground, and FIG. 13B illustrates an example in which a terminal is provided at a relatively great angle from the ground.

Referring to FIG. 12 and FIGS. 13A and 13B, the support plate 120 may be formed so that a length a, a', a" of one side of the support plate 120 is greater than a length b, b', b" of another side thereof.

FIG. 12 illustrates examples of a shape of the support plate 120. For example, a support plate 120a may be in a shape that protrudes from one side of a circular member. Alternatively, a support plate 120b may be in a shape that protrudes from one side of the circular member and may include a plurality of support legs at a protruded end. Alternatively, a support plate 120c may be in a shape in which one side of the circular member is cut and a horizontal plane is included.

They are provided as examples of the support plate 120 and are not provided to limit a shape of the support plate 120.

The support plate 120 may be rotatable. A diameter of one side of the support plate 120 is formed to be greater than that of another side thereof. Accordingly, an angle for holding the terminal T may be adjusted based on rotation of the support plate 120.

For example, referring to FIG. 13A, if the support plate 120a is rotated so that a short axis b of the support plate 120a is vertical relative to the ground, the terminal T may be provided at a relatively small angle from the ground.

Alternatively, referring to FIG. 13B, if the support plate 120a is rotated so that a long axis a of the support plate 120a is vertical relative to the ground, the terminal T may be provided at a relatively great angle from the ground.

Accordingly, if necessary, an angle for holding the terminal T may be adjusted. Once a support leg or a horizontal plane is included, the terminal T may be stably held relative to the ground.

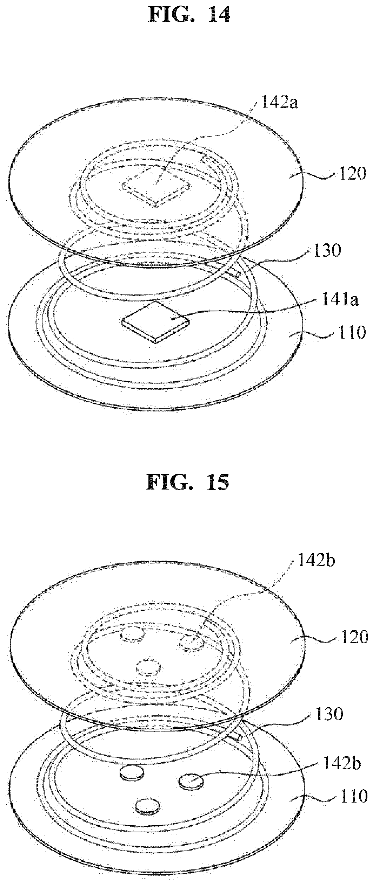

FIGS. 14 and 15 illustrate examples in which a plurality of magnetic bodies 140 are provided according to an example embodiment.

Referring to FIG. 14, the magnetic body 140 may include a first magnetic body 141a configured to attach to the fixed plate 110 and a second magnetic body 142a configured to attach to the support plate 120. The second magnetic body 142a may be configured to have a polarity opposite to that of the first magnetic body 141a. Accordingly, the first magnetic body 141a and the second magnetic body 142a may be in contact with each other through a magnetic force.

The first magnetic body 141a and the second magnetic body 142a may be provided at mutually corresponding positions and may be configured to guide a coupling position between the fixed plate 110 and the support plate 120.

For example, when the magnetic body 140 is provided to the fixed plate 110 and the support plate 120, the first magnetic body 141a and the second magnetic body 142a may couple with each other. Accordingly, the fixed plate 110 and the support plate 120 may be coupled based on positions of the first magnetic body 141a and the second magnetic body 142a. Accordingly, the fixed plate 110 and the support plate 120 may be coupled with each other at the predetermined position.

FIG. 14 illustrates an example in which the magnetic body 140 is provided in a quadrangular shape. In the case of a quadrangular magnet, a strong magnetic force may be formed on corner portions of a quadrangle. Since corner portions of the first magnetic body 141a couple with corner portions of the second magnetic body 142a, respectively, a coupling position and a coupling angle between the fixed plate 110 and the support plate 120 may be uniformly maintained.

Referring to FIG. 15, each of a first magnetic body 141b and a second magnetic body 142b may include a plurality of magnets. The first magnetic body 141b and the second magnetic body 142b may be provided in a circumferential direction based on the center of the support plate 120 or the fixed plate 110. The first magnetic body 141b and the second magnetic body 142b may be provided at corresponding positions on the fixed plate 110 and the support plate 120, respectively. FIG. 15 illustrates an example in which a magnetic body is in a circular shape.

A plurality of magnets may couple with another plurality of magnets that are provided at corresponding positions on another side, respectively. Accordingly, a coupling position between the support plate 120 and the fixed plate 110 may be guided, and the support plate 120 and the fixed plate 110 may couple with each other at a predetermined position.

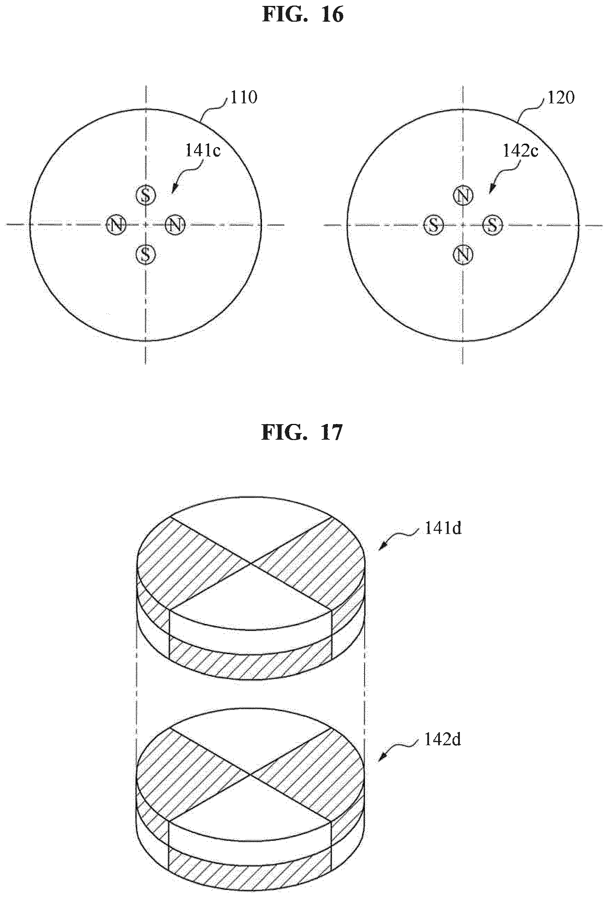

FIGS. 16 and 17 illustrate examples in which the magnetic body 140 has a plurality of polarities according to an example embodiment.

Referring to FIG. 16, each of a first magnetic body 141c and a second magnetic body 142c may include a plurality of magnets having different polarities.

For example, the first magnetic body 141c may include N-pole magnets and S-pole magnets that are alternately provided. In response thereto, the second magnetic body 142c may include a plurality of magnets that are provided at positions corresponding to the magnets of the first magnetic body 141c and have polarities opposite to those of the first magnetic body 141c.

When coupling the first magnetic body 141c and the second magnetic body 142c, magnets having opposite polarities may couple with each other. Accordingly, the coupling position between the support plate 120 and the fixed plate 110 may be guided to be uniform.

In particular, since a polarity of a magnet determines coupling between the first magnetic body 141c and the second magnetic body 142c, a rotating angle for coupling the support plate 120 and the fixed plate 110 may be determined. For example, the support plate 120 and the fixed plate 110 may be guided to couple with each other by providing magnets having opposite polarities at a desirable angle for coupling the support plate 120 and the fixed plate 110.

Referring to FIG. 17, each of a first magnetic body 141d and a second magnetic body 142d may include a magnet having a plurality of polarities in a single entity.

For example, the first magnetic body 141d may include a circular magnet and the circular magnet may be divided into a plurality of pieces. The neighboring pieces may be configured using magnets having different polarities. The first magnetic body 141d may include two or more layers, and the respective layers may be provided using corresponding polarities to provide a vertical magnetic force.

Similar thereto, the second magnetic body 142d may be formed to correspond to the first magnetic body 141d, and may be configured to have opposite polarities at corresponding positions.

Due to the above configuration, although a single magnet is provided, an angle and a position for coupling the support plate 120 and the fixed plate 110 may be determined.

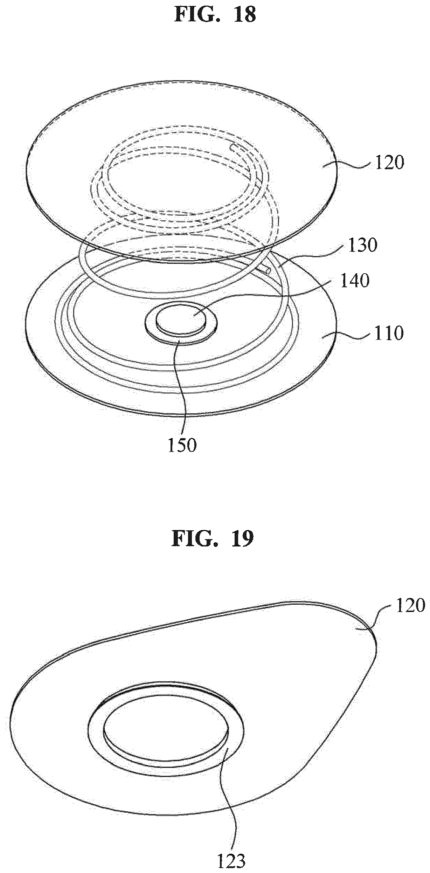

FIG. 18 is a perspective view of the terminal support stand 1 including a shielding member 150 according to an example embodiment.

Referring to FIG. 18, the terminal support stand 1 may further include the shielding member 150 capable of shielding a magnetic force. The shielding member 150 may include a conductive material, for example, a metal plate, a metal net, a plating film, and a conductive plastic.

The shielding member 150 may be attached to the fixed plate 110. The magnetic body 140 may be attached to the shielding member 150. That is, the shielding member 150 may be provided between the fixed plate 110 and the magnetic body 140.

Alternatively, the shielding member 150 may be provided to face the magnetic body 140 based on the fixed plate 110. That is, the fixed plate 110 may be provided between the shielding member 150 and the magnetic body 140.

Due to the above configuration, the shielding member 150 may block a magnetic force of the magnetic body 140 and may prevent the magnetic body 140 from affecting the terminal T.

Additionally, an outer shielding member (not shown) may be provided to the support plate 120. The support plate 120 may prevent the magnetic force of the magnetic body 140 from affecting an outside. For example, the outer shielding member may prevent the magnetic force of the magnetic body 140 from affecting, for example, a credit card a bankbook maintained together with the terminal.

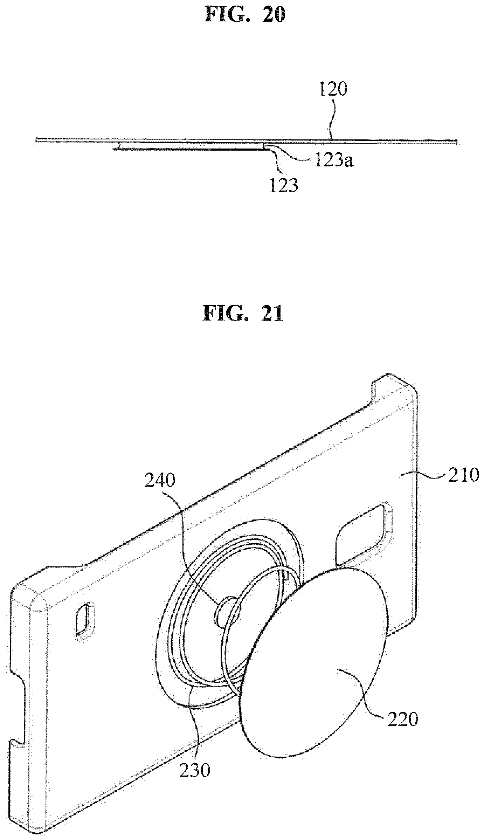

FIG. 19 illustrates the support plate 120 including a projection 123 according to an example embodiment, and FIG. 20 is a side view of the support plate 120 including the projection 123.

Referring to FIGS. 19 and 20, the projection 123 may protrude from the fixed plate 110 or the support plate 120. Hereinafter, a description is made based on an example in which the projection 123 is formed on the support plate 120. The description may be applicable to a case in which the projection 123 is formed on the fixed plate 110.

A cross-section of the projection 123 may be in a shape similar to an overall shape of the elastic body 130. For example, when the elastic body 130 is in an overall circular shape, the projection 123 may be formed in a cylindrical shape.

The projection 123 may include a hollow. The magnetic body 140 may be inserted into the hollow and the support plate 120 and the fixed plate 110 may couple through a magnet.

A side of the projection 123 may be recessed inward from the fixed plate 110. Hereinafter, a recessed portion is referred to as a recess 123a.

The elastic body 130 may wind along the recess 123a. An end of the projection 123 is formed to have a diameter greater than that of the recess 123a. Accordingly, it is possible to prevent the elastic body 130 wound along the recess 123a from deviating from the projection 123.

Also, as the elastic body 130 winds around the recess 123a, a damper effect may occur when coupling the support plate 120 and the fixed plate 110. A winding portion of the elastic body 130 relative to the projection 123 may be formed to be less than a cross-section of the projection 123. Accordingly, a friction may occur between the elastic body 130 and the projection 123. The friction may prevent the elastic body 130 from deviating from the projection 123 and may maintain a terminal supporting state.

FIG. 21 is a perspective view illustrating a terminal case 2 according to an example embodiment.

Hereinafter, the same elements may be designated with respect to elements having a common function with elements included in the example embodiments. Unless described otherwise, the aforementioned description may be applicable to the following example embodiments. Hereinafter, a further detailed description is omitted.

Referring to FIG. 21, the terminal case 2 may include a terminal cover 210, a support plate 220, an elastic body 230, and a magnetic body 240.

The terminal cover 210 may cover at least a portion of a terminal. The aforementioned terminal support stand 1 may be attached to the terminal and thereby used, whereas the terminal case 2 may be provided in a structure in which the support plate 220 couples with the terminal cover 210.

The support plate 220 may selectively couple with the terminal cover 210 through the magnetic body 240, and the elastic body 230 may connect the terminal cover 210 and the support plate 220.

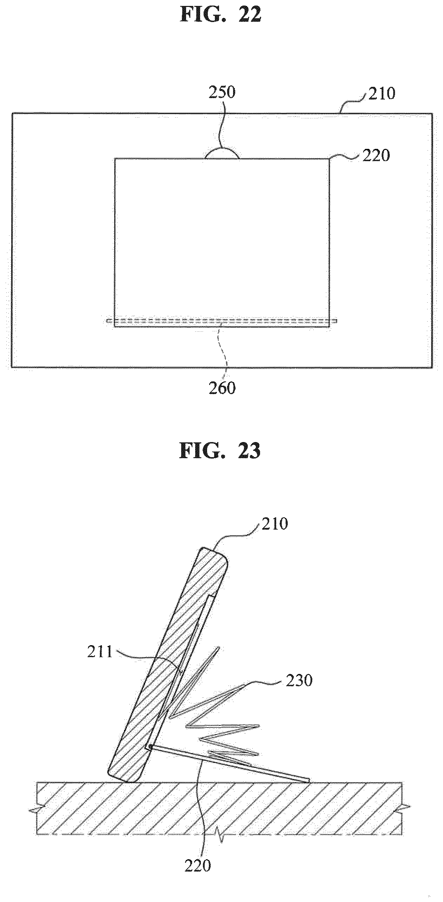

FIG. 22 illustrates a state in which the terminal cover 210 and the support plate 220 are hinge-connected and FIG. 23 illustrates a use state thereof.

Referring to FIG. 22, the terminal case 2 may include a connecting body 260 that hinge-connects the terminal cover 210 and the support plate 220. The support plate 220 may be rotatable based on the connecting body 260.

For example, the connecting body 260 may connect one side of the support plate 220 and the terminal cover 210. The connection portion is a position at which the terminal may be held by rotating the support plate 220 through the connecting body 260 and may be a lower side of the support plate 220.

A groove 250 may be formed on one side of the terminal cover 210. The user may separate the support plate 220 from the terminal cover 210 using the groove 250. For example, the user may insert a hand into the groove 250 and may rotate the support plate 220.

Referring to FIG. 23, the terminal cover 210 may include a receiver 211 configured to receive the support plate 220. In the case of not holding the terminal T, the user may compress the elastic body 230 by pressing the support plate 220 and may make the magnetic body 240 in contact with a case and the support plate 220. In this manner, the volume may be minimized.

Here, the support plate 220 may be received in the receiver 211 that is recessed inward from the terminal cover 210 and configured to prevent the support plate 220 from protruding outward or to allow the support plate 220 to minimally protrude outward in a state in which the support plate 220 is in contact with the terminal cover 210.

Accordingly, it is possible to prevent unnecessary rotation of the support plate 220 when the terminal is not held, and to achieve a visual effect as if the support plate 220 and the terminal cover 210 appear to be integrally formed.

A plurality of support plates 220 and a plurality of elastic bodies 230 may be provided, and may be provided at the rear of the terminal cover 210. Through the above configuration, it is possible to firmly hold the terminal.

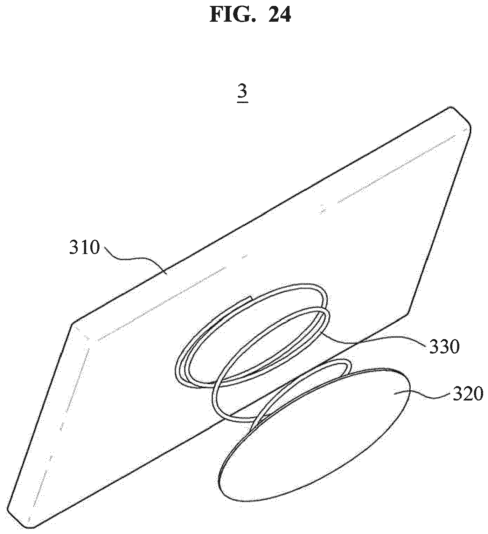

FIG. 24 illustrates a terminal assembly according to an example embodiment.

Referring to FIG. 24, a terminal assembly 3 may include a terminal body 310, a support plate 320, and an elastic body 330.

The support plate 320 may selectively couple with the terminal body 310. The elastic body 230 may connect the terminal body 310 and the support plate 320. The terminal assembly 3 may include a magnetic body (not shown) and may selectively couple the terminal body 310 and the support plate 320.

That is, the terminal assembly 3 may include the support plate 320.

The terminal assembly 3 is similar to the aforementioned terminal support stand 1 or terminal case 2. Accordingly, a further description is omitted.

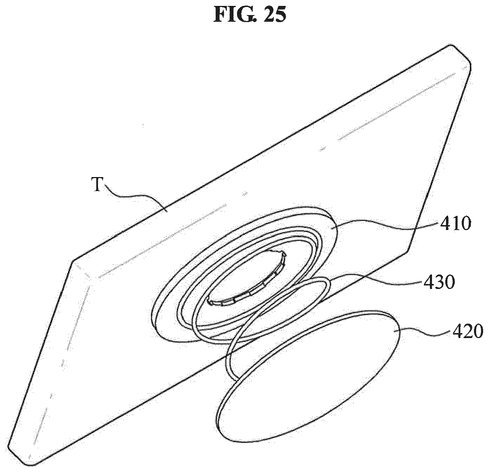

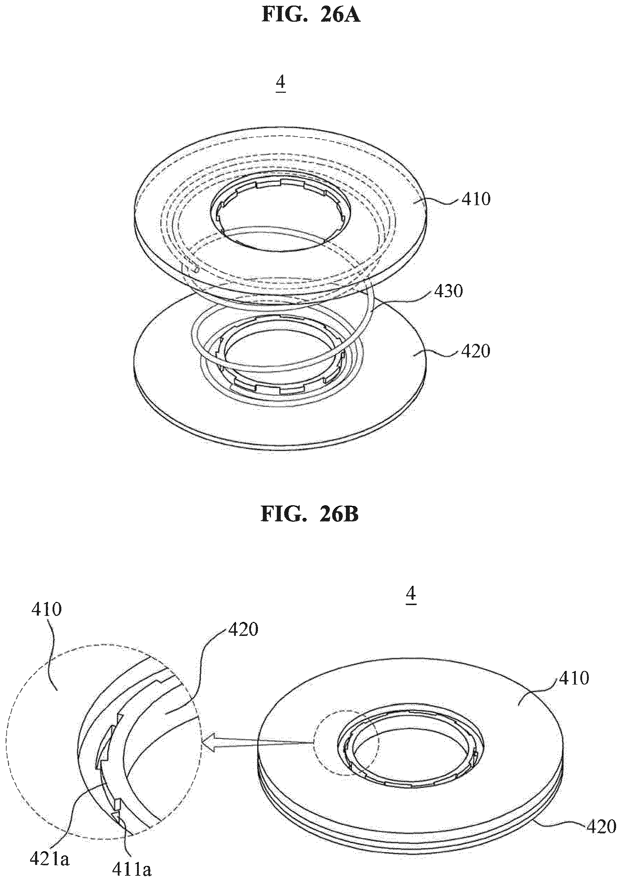

FIG. 25 illustrates a use state of a terminal support stand according to another example embodiment, FIG. 26A is a perspective view illustrating a state in which an elastic body of a terminal support stand is not compressed according to another example embodiment, and FIG. 26B is a perspective view illustrating a state in which an elastic body of a terminal support stand is compressed and a support plate and a fixed plate are coupled according to another example embodiment.

Hereinafter, the same elements may be designated with respect to elements having a common function with elements included in the example embodiments. Unless described otherwise, the aforementioned description may be applicable to the following example embodiments. Hereinafter, a further detailed description is omitted.

Referring to FIG. 25 and FIGS. 26A and 26B, a terminal support stand 4 may include a fixed plate 410, a support plate 420, and an elastic body 430.

The support plate 420 may selectively couple with the fixed plate 410. The terminal support stand 4 may couple the support plate 420 and the fixed plate 410 using a forced insertion scheme. Hereinafter, a further description is made.

The terminal support stand 4 may include a first coupler 411 and a second coupler 421. The first coupler 411 may be formed on one side of the fixed plate 410, and the second coupler 421 may be formed on one side of the support plate 420.

The first coupler 411 and the second coupler 421 may selectively couple the fixed plate 410 and the support plate 420. For example, the first coupler 411 and the second coupler 421 enable coupling using a forced insertion scheme.

For example, the first coupler 411 may be configured so that the second coupler 421 may be inserted into at least a portion of the first coupler 411 and thereby fixed when the second coupler 421 is pressed toward the first coupler 411. Also, when the second coupler 421 is pressed toward a direction opposite to the insertion direction, the second coupler 421 may be deviated from the first coupler 411.

As another example, the forced insertion scheme may be achieved by including an insertion groove and an insertion body having a size greater than that of the insertion groove.

Alternatively, the first coupler 411 and the second coupler 421 may selectively engage with each other due to their structural characteristics. The first coupler 411 or the second coupler 421 may include a saw-toothed structure. Hereinafter, a further description is made.

The fixed plate 410 and the support plate 420 may be selectively coupled using the first coupler 411 and the second coupler 421. FIG. 26B illustrates a state in which the fixed plate 410 and the support plate 420 are coupled.

When the terminal support stand 4 is not used, the volume may be minimized by coupling the fixed plate 410 and the support plate 420. A first protrusion 411a and a second protrusion 421a may overlap to prevent a separation between the fixed plate 410 and the support plate 420.

In the case of using the terminal support stand 4, the terminal T may be held by releasing a coupling state between the fixed plate 410 and the support plate 420. Once coupling between the fixed plate 410 and the support plate 420 is released, a spring may be decompressed and the fixed plate 410 and the support plate 420 may be separate due to the elasticity of the spring. In a state in which the fixed plate 410 and the support plate 420 are separate, the terminal support stand 4 may hold the terminal T at a predetermined angle from the ground as shown in FIG. 25.

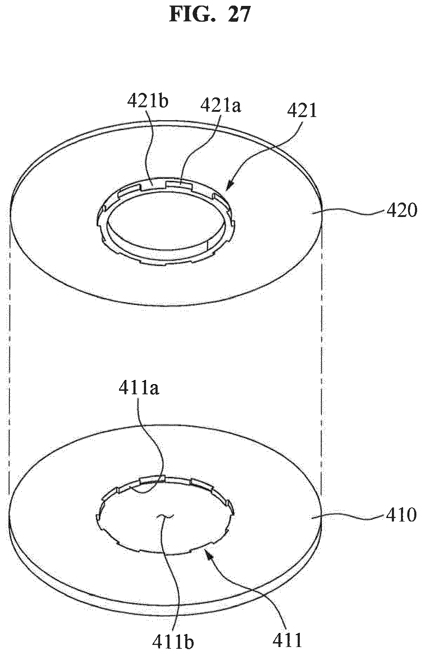

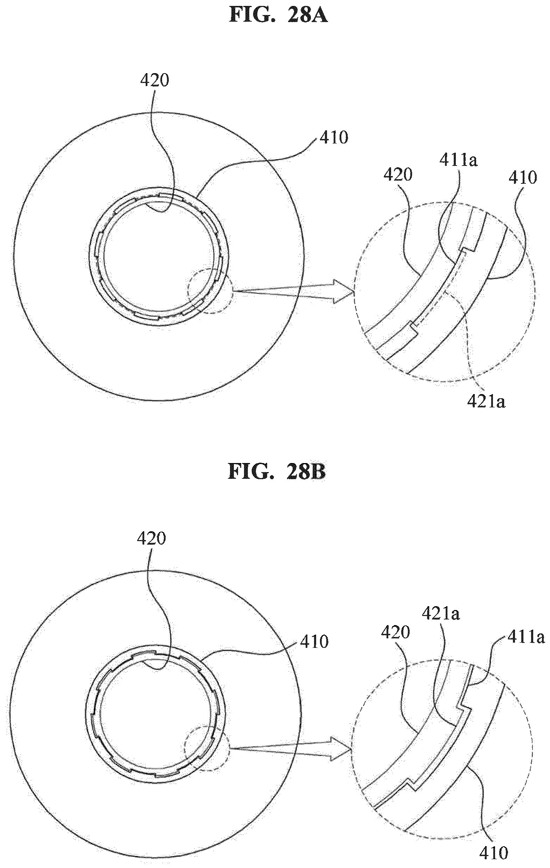

FIG. 27 is a perspective view illustrating the fixed plate 410 and the support plate 420 according to an example embodiment, FIG. 28 illustrates a state in which a fixed plate and a support plate are coupled, and FIG. 28B illustrates a state in which coupling between the fixed plate and the support plate is released.

Referring to FIG. 27 and FIGS. 28A and 28B, the first coupler 411 may be formed on one side of the fixed plate 410. The first coupler 411 may include a hollow 411b, and the hollow 411b may be provided in the fixed plate 410. For example, the hollow 411b may be provided at the center of the fixed plate 410 and may be in an overall cylindrical shape.

The first coupler 411 may include the saw-toothed first protrusion 411a formed inward from the hollow 411b. That is, the first protrusion 411a may protrude from an inner wall that constitutes the hollow 411b.

For example, a plurality of first protrusions 411a may protrude from the inner wall. The first protrusions 411a may be configured in an overall saw-toothed shape. The first protrusions 411a may be provided at predetermined intervals or at a specific position. Also, a single first protrusion 411a may be formed. The second coupler 421 may be formed on one side of the support plate 420. The second coupler 421 may include a pillar 421b that protrudes from one side of the support plate 420.

The second coupler 421 may include the saw-toothed second protrusion 421a. The second protrusion 421a may be formed along an outer side of the pillar 421b. The second protrusion 421a may selectively engage with the first protrusion 411a.

For example, the second protrusion 421a may be configured to correspond to a shape and a size of the first protrusion 411a. Accordingly, the second protrusion 421 may selectively engage with the first protrusion 411a.

The aforementioned description related to the first protrusion 411a and the second protrusion 421a is not to limit the shape thereof. If the first protrusion 411a and the second protrusion 421a may selectively engage with each other, each of the first protrusion 411a and the second protrusion 421a may be configured in a different type.

The second protrusion 421a may be formed on a portion of the pillar 421b. For example, the second protrusion 421a may be formed on a portion adjacent to an end of the pillar 421b.

Here, an interval between the second protrusion 421a and the support plate 420 may be greater than a height of the first coupler 411. That is, a portion of the pillar 421b on which the second protrusion 421a is not formed may be formed to be greater than the height of the first coupler 411.

When coupling the fixed plate 410 and the support plate 420, the second coupler 421 may penetrate the first coupler 411. The second coupler 421 may penetrate the first coupler 411 by rotating the second coupler 421 in a direction in which the first protrusion 411a and the second protrusion 421a do not interfere with each other.

The support plate 420 may rotate in a state in which the second coupler 421 has penetrated the first coupler 411. In this state, the first coupler 411 may make contact with a portion of the pillar 421b on which the second protrusion 421a is not formed and the first protrusion 411a does not interfere with the second protrusion 421a when the second coupler 421 rotates. Thus, the second coupler 421 may rotate.

The second coupler 421 may rotate so that at least a portion of the first protrusion 411a and at least a portion of the second protrusion 421a may overlap. Referring to FIG. 28A, overlapping may indicate that at least a portion of the first protrusion 411 a and at least a portion of the second protrusion 421 a are overlapping provided in one direction.

In the case of not using the terminal support stand 4, the first protrusion 411a and the second protrusion 421a may overlap by compressing the elastic body 430 through pressing of the support plate 420 and by pressing the support plate 420 as shown in FIG. 28A.

Although the elastic body 430 is to deviate from a compressed state through an elastic force, interference occurs in the movement of the support plate 420 due to overlapping between the first protrusion 411a and the second protrusion 421a and the compressed state may be maintained. That is, interference may occur in the movement of the support plate 420 that separates from the fixed plate 410.

In the case of using the terminal support stand 4 in the above state, the fixed plate 410 and the support plate 420 may be separate from each other by rotating the support plate 420. Once the first protrusion 411a and the second protrusion 421a are provided at mutually engaging positions by rotating the support plate 420 as shown in FIG. 28B, the first protrusion 411a and the second protrusion 421a may not overlap and accordingly, the compressed state of the elastic body 430 may be released. Accordingly, the support plate 420 may be spaced apart from the fixed plate 410 and may support the terminal T.

Herein, referring to FIG. 28B, engaging may indicate that a portion of the first coupler 411 on which the first protrusion 411a is formed is in contact with a portion of the second coupler 421 on which the second protrusion 421a is not formed.

Also, in addition to the coupling and separation scheme, a forced insertion scheme may be employed. For example, when the support plate 420 is pressed at a position at which the first protrusion 411a and the second protrusion 421a overlap, the first protrusion 411 a or the second protrusion 421a may be spontaneously deformed and the first coupler 411 and the second coupler 421 may be coupled.

Conversely, when the support plate 420 is pressed in a direction opposite to an insertion direction in a state in which the first coupler 411 and the second coupler 421 are coupled, the first protrusion 411a or the second protrusion 421a may be spontaneously deformed and coupling between the first coupler 411 and the second coupler 421 may be released.

In the aforementioned structure, a coupler including the hollow 411b is formed on the fixed plate 410 and a coupler that penetrates the hollow 411b is formed on the support plate 420. On the contrary, the coupler of the fixed plate 410 and the coupler of the support plate 420 may be reversely formed.

In detail, the fixed plate 410 may include the coupler that is formed on one side of the fixed plate 410 and includes the saw-toothed first protrusion. The support plate 420 may include the coupler that is formed on one side of the support plate 420 and includes a hollow, and includes the second protrusion formed inward from the hollow and configured to selectively engage with the first protrusion. The fixed plate 410 and the support plate 420 may be selectively coupled through the couplers.

The aforementioned description related to the first coupler 411 and the second coupler 421 may also be applicable herein. A further description is omitted here.

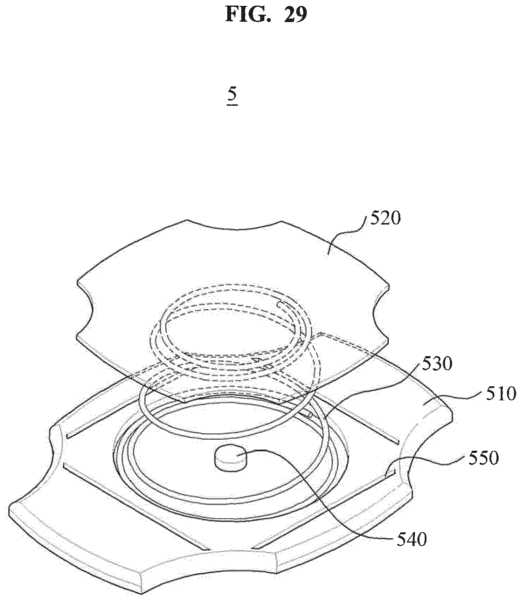

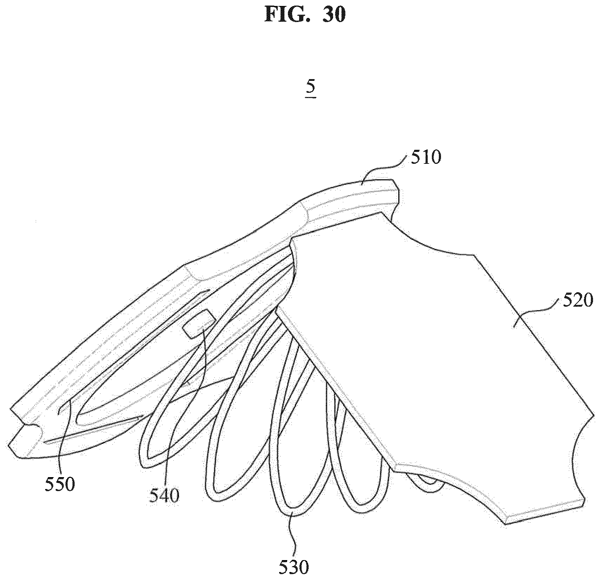

FIG. 29 illustrates a terminal support stand that includes an insertion groove according to an example embodiment, and FIG. 30 illustrates a state in which a support plate is inserted into the insertion groove according to an example embodiment.

Referring to FIGS. 29 and 30, an insertion groove 550 is formed on one side of a fixed plate 510 and at least a portion of a support plate 520 is inserted into the insertion groove 550 so that the fixed plate 510 and the support plate 520 may be coupled.

For example, an inner side of the support plate 520 may be configured in a shape close to a round cross, and the insertion groove 550 may be configured to correspond to a shape of each end of the support plate 520.

The fixed plate 510 may be formed in a shape similar to that of the support plate 520 to give a sense of unity in a state in which the fixed plate 510 and the support plate 520 are coupled.

Once the support plate 520 is inserted into the insertion groove 550 and the support plate 520 and the fixed plate 510 are coupled, the support plate 520 and the fixed plate 510 may be fastened in a shape close to verticality. Accordingly, a terminal support stand 5 may stably hold a terminal.

Although FIGS. 29 and 30 illustrate a state in which an insertion groove is formed on a fixed plate, the insertion groove 550 may be formed on the aforementioned terminal case or terminal body and the support plate 520 may couple with the terminal case or the terminal body.

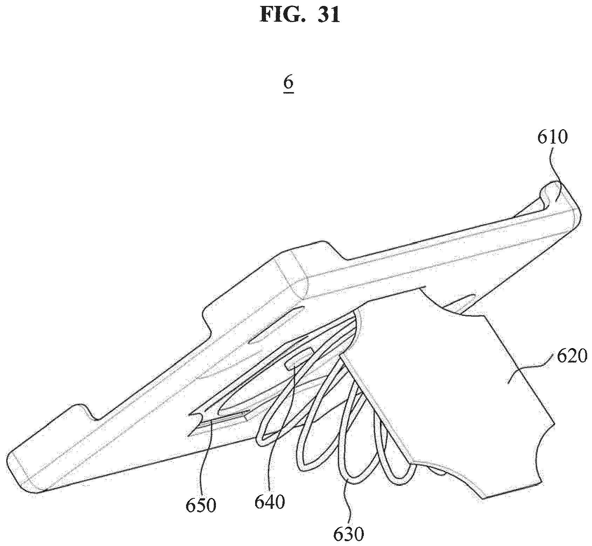

FIG. 31 is a perspective view illustrating a terminal case 6 according to another example embodiment.

Referring to FIG. 31, the terminal case 6 may include a terminal cover 610 that serves as a fixed plate. An insertion groove 650 is formed on a terminal cover 610 and a support plate 620 is inserted into the insertion groove 650 so that the terminal cover 610 and the insertion groove 650 may be coupled.

That is, the terminal cover 610 itself may function as the fixed plate and may couple with the support plate 620 and may adjust an angle for fixing a terminal.

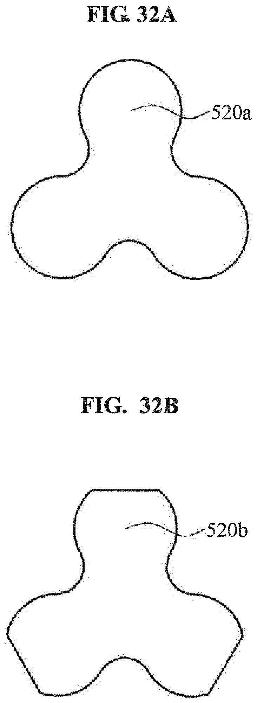

FIG. 32A illustrates an example of a shape of a support plate according to an example embodiment, and FIG. 32B illustrates another example of a shape of a support plate according to an example embodiment.

Referring to FIGS. 32A and 32B, the support plate 520 may be formed in various shapes in addition to the aforementioned shapes.

For example, referring to a support plate 520a of FIG. 32A, the support plate 520 may be configured by providing a plurality of circular shapes at a predetermined angle. Referring to a support plate 520b of FIG. 32B, the support plate 520 may be configured by cutting a portion of each circular shape.

They are provided as examples only and the support plate 520 may be configured in various shapes if a corresponding shape allows the support plate 520 to insert into the insertion groove 550. The fixed plate 510 may be configured in a shape similar to that of the support plate 520. Accordingly, it is possible to give a sense of unity in a state in which the fixed plate 510 and the support plate 520 are coupled.

A number of example embodiments have been described above. Nevertheless, it should be understood that various modifications may be made to these example embodiments. For example, suitable results may be achieved if the described techniques are performed in a different order and/or if components in a described system, architecture, device, or circuit are coupled in a different manner and/or replaced or supplemented by other components or their equivalents.

Accordingly, other implementations, other example embodiments, and other equivalents of the claims are within the scope of the following claims.

## Claims

1. A terminal support stand comprising:
a fixed plate configured to be attachable to a terminal;
a support plate configured to selectively couple with the fixed plate and to at least partially make contact with the ground when the support plate is spaced apart from the fixed plate; and
an elastic body configured to connect the fixed plate and the support plate and to be compressible.

2. The terminal support stand of claim 1, further comprising:
a magnetic body configured to attach on the fixed plate or the support plate and to selectively couple the fixed plate and the support plate.

3. The terminal support stand of claim 2, wherein the magnetic body is provided at the center of the support plate or the fixed plate, and a coupling state between the fixed plate and the support plate is released in response to pressing an edge of the support plate.

4. The terminal support stand of claim 2, wherein a plurality of magnetic bodies are provided in a circumferential direction based on the center of the support plate or the fixed plate.

5. The terminal support stand of claim 2, wherein the magnetic body includes a first magnetic body configured to attach to the fixed plate, and a second magnetic body configured to attach to the support plate and to have a polarity opposite to that of the first magnetic body.

6. The terminal support stand of claim 5, wherein the first magnetic body includes a plurality of magnets having different polarities, and the second magnetic body includes a plurality of magnets having a polarity opposite to that of the second magnetic body.

7. The terminal support stand of claim 5, wherein each of the first magnetic body and the second magnetic body includes a magnet having a plurality of polarities within a single entity.

8. The terminal support stand of claim 2, further comprising:
a shielding member configured to attach to the fixed plate and to shield a magnetic force,
wherein the shielding member is provided between the terminal and the magnetic body and configured to prevent the magnetic body from affecting the terminal.

9. The terminal support stand of claim 2, further comprising:
an outer shielding member provided to the support plate.

10. The terminal support stand of claim 2, further comprising:
a push guide formed along an edge of the fixed plate or the support plate so that a portion of the push guide is open, wherein a coupling state between the fixed plate and the support plate is released in response to pressing the open portion.

11. The terminal support stand of claim 2, wherein the fixed plate or the support plate includes a protrusion configured to protrude from one side of the fixed plate or support plate,
a portion of the fixed plate or the support plate on which the protrusion is not formed includes a protrusion receiver configured to receive the protrusion and of which at least a portion is inclined, and
the protrusion is configured to release a coupling state between the fixed plate and the support plate by moving along a slope of the protrusion receiver in response to rotation of the fixed plate or the support plate in a state in which the protrusion receiver is received.

12. The terminal support stand of claim 1, wherein a projection around which a portion of the elastic body winds is formed on the fixed plate or the support plate.

13. The terminal support stand of claim 12, wherein the projection is configured to protrude from the fixed plate or the support plate, and includes a recess that is recessed inward from the fixed plate or the support plate.

14. The terminal support stand of claim 1, wherein a length of one side of the support plate is formed to be greater than a length of another side of the support plate.

15. The terminal support stand of claim 14, wherein the support plate is configured to be rotatable and an angle for holding the terminal is adjustable by rotating the support plate.

16. The terminal support stand of claim 1, wherein the elastic body includes a tapered spring.

17. The terminal support stand of claim 1, wherein one cross-section of the elastic body is formed to have an area greater than that of another cross-section of the elastic body.

18. A terminal case comprising:
a terminal cover configured to cover at least a portion of a terminal;
a support plate configured to selectively couple with the terminal cover and to at least partially make contact with the ground when the support plate is spaced apart from the terminal cover; and
an elastic body configured to connect the terminal cover and the support plate and to be compressible.

19. The terminal case of claim 18, further comprising:
a magnetic body configured to attach on the terminal cover or the support plate and to selectively couple the terminal cover and the support plate.

20. The terminal case of claim 18, wherein the terminal cover includes a receiver recessed inward from the case and configured to receive the support plate.

21. The terminal case of claim 18, further comprising:
a connecting body configured to hinge-connect the terminal cover and the support plate.

22. The terminal case of claim 18, wherein the terminal cover and the elastic body are integrally formed through injection molding.

23. A terminal case comprising:
a terminal body;
a support plate configured to selectively couple with the terminal body and to at least partially make contact with the ground when the support plate is spaced apart from the terminal body; and
an elastic body configured to connect the terminal body and the support plate and to be compressible.

24. The terminal case of claim 23, further comprising:
a magnetic body configured to attach on the terminal body or the support plate, and to selectively couple the terminal body and the support plate.

25. A terminal support stand comprising:
a fixed plate configured to be attachable to a terminal;
a first coupler formed on one side of the fixed plate, and including a hollow and including a saw-toothed first protrusion formed inward from the hollow;
a support plate configured to selectively couple with the fixed plate and to at least partially make contact with the ground when the support plate is spaced apart from the fixed plate;
a second coupler formed on one side of the support plate and including a saw-toothed second protrusion configured to selectively engage with the first protrusion; and
an elastic body configured to connect the fixed plate and the support plate and to be compressible.

26. The terminal support stand of claim 25, wherein the support plate is configured to be rotatable, and the first coupler and the second coupler are configured to selectively engage with each other in response to rotation of the support plate.

27. The terminal support stand of claim 25, wherein the second coupler includes a pillar configured to protrude from one side of the support plate, and the second protrusion is formed along an outer side of the pillar.

28. The terminal support stand of claim 27, wherein the second protrusion is formed on a portion of the pillar and an interval between the second protrusion and the support plate is configured to be greater than a height of the first coupler, and
the second coupler is configured to penetrate the first coupler in response to coupling the fixed plate and the support plate, and at least a portion of the first protrusion and at least a portion of the second protrusion are provided to overlap in response to rotation of the support plate in a state in which the second coupler has penetrated the first coupler, and interference occurs in a movement of the support plate in one direction.

29. A terminal support stand comprising:
a fixed plate configured to be attachable to a terminal;
a first coupler formed on one side of the fixed plate and including a saw-toothed first protrusion;
a support plate configured to selectively couple with the fixed plate and to at least partially make contact with the ground when the support plate is spaced apart from the fixed plate;
a second coupler formed on one side of the support plate, and including a hollow and including a second protrusion formed inward from the hollow to selectively engage with the first protrusion; and
an elastic body configured to connect the fixed plate and the support plate and to be compressible.

30. A terminal support stand comprising:
a fixed plate configured to be attachable to a terminal;
a first coupler formed on one side of the fixed plate;
a support plate configured to selectively couple with the fixed plate and to at least partially contact with the ground when the support plate is spaced apart from the fixed plate;
a second coupler formed on one side of the support plate and configured to couple with the first coupler through a forced insertion scheme; and
an elastic body configured to connect the fixed plate and the support plate and to be compressible.

31. A terminal case comprising:
a terminal cover configured to cover at least a portion of a terminal;
a first coupler formed on one side of the case;
a support plate configured to selectively couple with the case and to at least partially make contact with the ground when the support plate is spaced apart from the case;
a second coupler formed on one side of the support plate and to couple with the first coupler through a forced insertion scheme; and
an elastic body configured to connect the case and the support and to be compressible.

32. A terminal assembly comprising:
a terminal body;
a first coupler formed on one side of the terminal, and including a hollow and including a saw-toothed first protrusion formed inward from the hollow;
a support plate configured to selectively couple with the terminal and to at least partially make contact with the ground when the support plate is spaced apart from the terminal;
a second coupler formed on one side of the support plate and including a saw-toothed second protrusion configured to selectively engage with the first protrusion; and
an elastic body configured to connect the terminal and the support plate and to be compressible.

33. A terminal support stand comprising:
a fixed plate configured to be attachable to a terminal;
a support plate configured to selectively couple with the fixed plate and to at least partially make contact with the ground when the support plate is spaced apart from the fixed plate;
an elastic body configured to connect the fixed plate and the support plate and to be compressible; and
an insertion groove formed on the fixed plate and into which at least a portion of the support plate inserts.

34. A terminal assembly comprising:
a terminal body;
a first coupler formed on one side of the terminal body;
a support plate configured to selectively couple with the terminal body and to at least partially make contact with the ground when the support plate is spaced apart from the terminal body;
a second coupler formed on one side of the support plate and configured to couple with the first coupler through a forced insertion scheme; and
an elastic body configured to connect the terminal body and the support plate and to be compressible.

35. A terminal case comprising:
a terminal cover configured to cover at least a portion of a terminal;
a first coupler formed on one side of the terminal cover, and including a hollow and including a saw-toothed first protrusion formed inward from the hollow;
a support plate configured to selectively couple with the terminal cover and to at least partially make contact with the ground when the support plate is spaced apart from the terminal cover;
a second coupler formed on one side of the support plate and including a saw-toothed second protrusion configured to selectively engage with the first protrusion; and
an elastic body configured to connect the terminal cover and the support plate and to be compressible.
